# FASCICULE DE BREVET EUROPEEN

(11) **EP 1 067 446 B1**
(45) Date de publication et mention de la délivrance du brevet: **12.12.2007**
(21) Numéro de dépôt: 00401784.4
(22) Date de dépôt: 22.06.2000
(51) Int. Cl.: G05D 1/08, B64G 1/28

(54) **Système pour le contrôle d'un satellite en attitude et procédé correspondant**
Verfahren und Vorrichtung zur Lageregelung eines Satelliten
Sytem for satellite attitude control and corresponding method

(30) Priorité: 08.07.1999 FR 9908841
(43) Date de publication de la demande: 10.01.2001
(73) Titulaire: Alcatel Lucent, 75008 Paris (FR)
(72) Inventeur: Salenc, Cédric, 06610 Le Cannet (FR); Roser, Xavier, 06400 Cannes (FR)
(74) Mandataire: Esselin, Sophie

(56) Documents cités:
- EP-A- 0 568 209
- WERTZ N L: "Spacecraft Attitude Determination and Control" 1978 , NL,DORDRECHT, KLUWER, PAGE(S) 200-203 XP002130913 * page 200 - page 203 *
- HARI B HABLANI: "SUN-TRACKING COMMANDS AND REACTION WHEEL SIZING WITH CONFIGURATION OPTIMIZATION" JOURNAL OF GUIDANCE AND CONTROL AND DYNAMICS,US,AIAA. NEW YORK, vol. 17, no. 4, 1 juillet 1994 (1994-07-01), pages 805-814, XP000494550 ISSN: 0731-5090

## Description

L'invention concerne un système destiné à assurer le contrôle en attitude d'un satellite en orbite, ce système étant plus particulièrement prévu pour être exploité, lorsqu'une grande agilité du satellite est recherchée. Elle concerne aussi un procédé de contrôle pour satellite comportant un tel système.

L'exploitation d'un satellite en orbite dans l'espace implique que ce satellite soit équipé d'un système permettant de le contrôler en attitude pour qu'il puisse être orienté de manière déterminée et stabilisé, lorsqu'il est convenablement orienté.

Dans certaines formes d'exploitation où une grande agilité du satellite est recherchée comme cela peut être le cas avec un satellite d'observation, il est important d'avoir un système de contrôle d'attitude qui permette de réaliser rapidement des changements d'orientation et la stabilisation du satellite après de tels changements.

Comme il est connu, l'orientation et la stabilisation d'un satellite peuvent être obtenues, avec une dépense relativement faible en énergie, par action d'un système de contrôle d'attitude entraînant une réaction du satellite par rapport à un mécanisme en mouvement à l'intérieur de ce satellite, l'énergie utilisée pouvant de plus être une énergie renouvelable.

Un exemple d'un tel système de contrôle est par exemple décrit dans le document US-A-3452848. Ce système exploite des actionneurs gyroscopiques comportant chacun un rotor motorisé, qui est exploité pour créer un moment cinétique constant en amplitude , et un système à cardan qui permet de modifier l'orientation du rotor et en conséquence son moment cinétique. Comme il est connu, l'échange de moment cinétique entre un actionneur gyroscopique et le satellite où il est embarqué peut être très rapide. Toutefois de tels actionneurs manquent de précision, sauf à utiliser une très sévère spécification notamment au niveau de leurs moteurs. En effet, le rapport entre la précision du couple de sortie d'un actionneur gyroscopiques et celle de son moteur cardan est fonction de la valeur du moment cinétique. De plus, un actionneur gyroscopique génère des couples tournants, alors que l'obtention d'un couple fixe serait préférable. La loi de guidage d'un satellite équipé d'un système de contrôle à actionneurs gyroscopiques est donc, d'une manière générale, relativement complexe et laisse place à des singularités qui correspondent à des situations où le système est incapable de fournir un couple dans une direction donnée, ce qui peut avoir pour conséquence une perte de contrôle du satellite. Mais, comme il est connu, malgré ces inconvénients, de tels actionneurs gyroscopiques sont exploités, car ils offrent une grande capacité en matière de couple, ce qui permet d'obtenir une rotation rapide du satellite qu'ils équipent, au prix d'une spécification particulièrement sévère et d'un surdimensionnement du système qui les contrôle et bien qu'ils soient en conséquence d'un coût élevé.

Il est aussi connu d'inclure des roues de réaction qui ont pour avantage d'être mécaniquement moins complexes que les actionneurs gyroscopiques et pour inconvénient de ne produire qu'un couple beaucoup plus faible que celui qu'est susceptible de produire un actionneur gyroscopique. Le couple susceptible d'être produit par une roue de réaction est par exemple de l'ordre de 1 Nm, ce qui est à comparer avec un couple susceptible d'aller jusqu'à plusieurs milliers de Nm pour un actionneur gyroscopique.

L'invention propose donc un système pour le contrôle d'un satellite en attitude.

Selon une caractéristique de l'invention ce système comporte un premier étage de contrôle, composé d'actionneurs gyroscopiques, et un second étage de contrôle, composé de roues à réaction, qui sont respectivement exploités par un ensemble de traitement programmé, le premier pour assurer les changements d'attitude du satellite et le second pour assurer la précision et la stabilité du pointage du satellite.

L'invention propose aussi un procédé de contrôle d'attitude pour satellite comportant un premier étage de contrôle, composé d'actionneurs gyroscopiques, et un second étage de contrôle, composé de roues à réaction.

Selon une caractéristique de l'invention ce procédé exploite le premier étage, composé d'actionneurs, pour la réalisation sur commande des changements d'attitude du satellite et il exploite le second étage, composé de roues de réaction, pour le pointage du satellite et sa stabilisation.

Selon l'invention, le procédé exploite aussi l'étage composé de roues de réaction pour accumuler les couples perturbateurs qui affectent le satellite.

L'invention, ses caractéristiques et ses avantages sont précisés dans la description qui suit en liaison avec les figures évoquées ci-dessous.
Les figures 1 et 2 correspondent à deux représentations schématiques respectivement relatives à une roue de réaction et à un actionneur gyroscopique.

La figure 3 présente un schéma de principe d'un exemple d'étage composé d'actionneurs gyroscopiques pour système de contrôle de l'attitude d'un satellite en orbite, selon l'invention.

La figure 4 est un schéma représentant un exemple de distribution des projections dans un plan des moments cinétiques créés par un étage d'actionneurs gyroscopiques tel qu'illustré sur la figure 3

La figure 5 est un diagramme vectoriel représentatif des projections dans un plan des moments cinétiques qui sont créés par un étage d'actionneurs gyroscopiques, tel qu'illustré sur la figure 3, et qui correspondent à la distribution présentée sur la figure 4.

La figure 6 présente un schéma de principe d'un exemple d'étage, composé de par roues de réaction, pour système de contrôle de l'attitude d'un satellite en orbite selon l'invention.

La figure 7 est un schéma de principe d'un exemple de système de contrôle d'attitude selon l'invention.

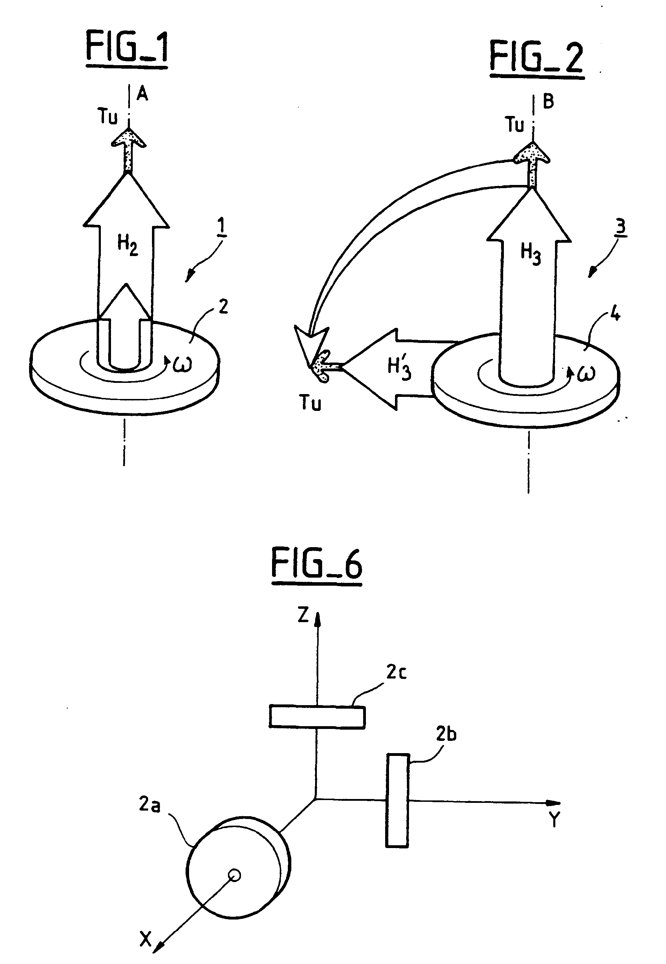

Une représentation schématique d'une roue de réaction 1, selon l'art connu, est montrée en figure 1, cette roue comporte un disque 2 entraîné en rotation autour d'un axe A, fixement orienté, et ce disque possède un moment cinétique H qui croît avec la vitesse de rotation ω que lui imprime un moteur à vitesse réglable, non représenté. Deux valeurs différentes de moment cinétique H₁ et H₂ sont symbolisées sur la figure.

Le couple utile Tu produit par le disque 2 est un couple axial qui croît avec la vitesse et qui tend à faire tourner par réaction la structure au niveau de laquelle la roue 1 est montée, cette structure étant celle d'un satellite dans l'application envisagée.

Pour des raisons connues de l'homme de métier, la masse d'un disque de roue de réaction embarquée à bord d'un satellite doit généralement rester limitée, en conséquence le couple obtenu et l'échange maximal de moment cinétique ne peuvent généralement pas être très élevés. Par contre, les mécanismes de support et d'entraînement de la roue peuvent aisément être simples et robustes et le contrôle de la vitesse de la roue, par action sur le moteur qui l'entraîne, peut être réalisé par mise en oeuvre de techniques efficaces et sûres, bien maîtrisées par l'homme de métier.

Une représentation schématique d'un actionneur gyroscopique 3, selon l'art connu, est montrée en figure 2, un tel actionneur comporte un disque 4 entraîné en rotation autour d'un axe YY', dont l'orientation dans un plan fixe peut être volontairement modifiée en raison du montage du disque 4 dans un mécanisme à simple cardan asservi, non représenté. La vitesse de rotation du disque 4 est maintenue constante et se traduit par un moment cinétique H₃ de valeur absolue constante déterminée. Un important transfert d'énergie s'effectue entre le disque 4 et la structure où l'actionneur gyroscopique est monté, lorsque l'orientation de l'axe B et donc celle du moment cinétique H3 sont modifiées. Ceci est obtenu par une action de basculement qui est commandée au niveau du mécanisme à cardan et qui entraîne une rotation de l'axe B dans un plan. Deux orientations du moment cinétique H₃ et H'₃ du disque 4 sont ici illustrées, l'orientation du second est supposée obtenue par basculement de l'axe B à angle droit dans le plan de la figure.

Comme il est connu, l'échange maximal de moment cinétique entre disque 4 et structure et la valeur du couple obtenu atteignent des valeurs beaucoup plus élevées que dans le cas d'une roue de réaction. Ceci permet donc une rapide rotation de la structure par réaction, dans le cas d'une structure mobile et notamment d'un satellite en orbite.

La réalisation mécanique d'un actionneur gyroscopique est plus délicate que celle d'une roue de réaction, du fait de la nécessaire implantation de robustes éléments de joint mécaniques et électriques qu'impliquent la présence du cardan. De plus dans les systèmes de contrôle d'attitude pour satellite où le positionnement du satellite est entièrement contrôlé par un groupe d'actionneurs gyroscopiques, il est nécessaire que ces actionneurs soient aptes à fournir des couples élevés pour procurer une bonne agilité au satellite en orbite qu'ils équipent et qu'ils permettent en même temps de positionner avec précision et de manière stable dans une attitude déterminée. Ceci est notamment le cas lorsque le satellite doit atteindre et conserver une ligne de visée demandée.

Comme il est connu, le nombre et la position des actionneurs gyroscopiques d'un satellite est déterminé a pour objectif de lui permettre d'atteindre et de se maintenir dans un maximum d'attitudes différentes, lorsqu'il est en orbite, et d'éviter qu'une attitude non modifiable puisse être obtenue.

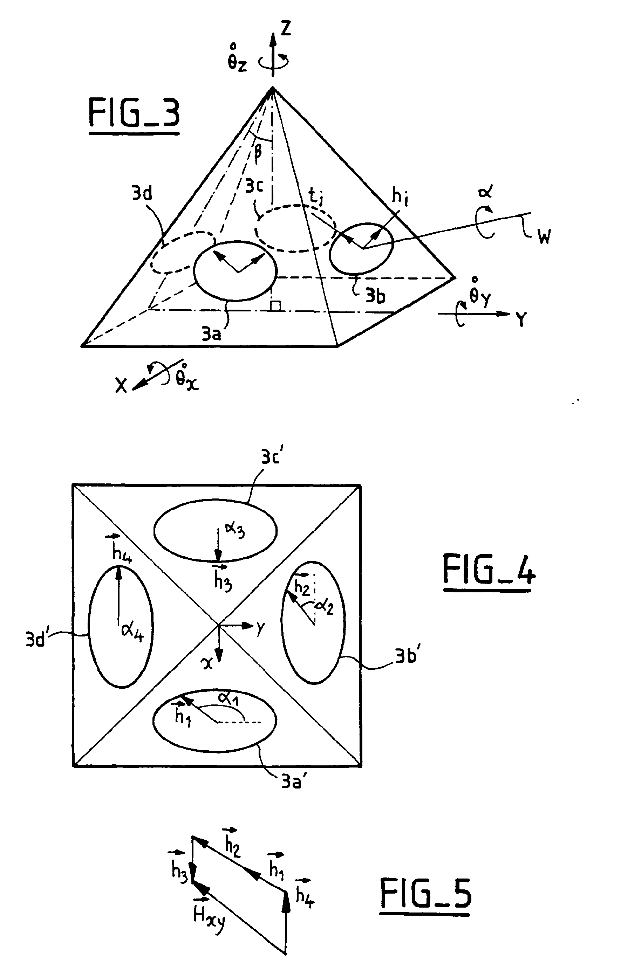

La figure 3 présente un exemple schématique d'une structure de groupe d'actionneurs gyroscopiques, connue, qui est ici supposée exploitée pour la constitution d'un étage de contrôle par actionneurs gyroscopiques pour système de contrôle de l'attitude d'un satellite en orbite selon l'invention, étant entendu que cet étage peut éventuellement être constitué d'actionneurs gyroscopiques dont le nombre et/ou la disposition est ou sont différents.

Selon la structure connue, schématisée sur la figure 3, quatre actionneurs gyroscopiques sont exploités pour assurer le positionnement d'un satellite qu'ils équipent, ces actionneurs sont répartis de manière que le plan dans lequel évolue le moment cinétique H propre à chacun d'eux soit confondu avec celui que définit l'une des quatre faces latérales d'une pyramide à base carrée.

La courbe fermée constituant l'enveloppe où est susceptible de se déplacer le moment cinétique H de chacun d'entre eux est représentée sur une face correspondante de pyramide, sous l'une des références 3a, 3b, 3c, 3d. Un moment cinétique hᵢ et le couple de sortie correspondant tᵢ à un instant i sont schématisés sur la figure 3 pour l'actionneur dont la courbe de moment cinétique est référencée 3a.

La combinaison des actions, respectivement produites par les actionneurs paraboliques sur commande, permettent de modifier l'attitude en orbite du satellite qui les comportent. Chaque actionneur permet de faire tourner ce satellite par rapport à l'axe d'articulation de son propre cardan selon lequel bascule, sur commande, le disque 4 que cet actionneur comporte. Cet axe de rotation passe par le centre de la courbe enveloppe de moment cinétique au plan de laquelle il est perpendiculaire, tel l'axe référencé W pour l'actionneur dont la courbe d'enveloppe est 3a. La modification du moment cinétique obtenu avec un actionneur se traduit par un couple qui entraîne une rotation du satellite par rapport à l'axe W avec une vitesse de rotation α. Cette rotation peut être considérée comme se traduisant par des rotations selon les trois axes X, Y, Z d'un référentiel fixe avec des composantes respectives de vitesse θ̇ₓ, θ̇_{y}, θ̇_{z}.

Chacune de ces trois composantes peut être considérée comme obtenue par combinaison des composantes qui sont dans le plan de référence à laquelle la composante considérée est perpendiculaire, tel le plan XY défini par les axes X et Y pour la composante θ̇_{z} et qui sont dues aux rotations simultanément produites par les quatre actionneurs gyroscopiques du satellite, à ce moment.

Les projections h̅₁, h̅₂, h̅₃, h̅₄ dans le plan XY, des moments cinétiques H₁ H₂ H₃, H₄ relatifs aux quatre actionneurs gyroscopiques d'un satellite à un instant donné, déterminent la composante H̅_{xy} du moment cinétique résultant pour le satellite, comme on le voit sur la figure 5. L'obtention d'une rotation du satellite d'un angle donné par action des actionneurs gyroscopiques se traduit donc par l'obtention d'un moment cinétique résultant dont les composantes projetées dans les trois plans XY, XZ et YZ doivent pouvoir être obtenues par addition vectorielle des projections des moments cinétiques alors produits par les quatre actionneurs. Dans l'exemple illustré sur les figures 4 et 5, ceci est obtenu au niveau du plan XY par l'addition vectorielle des projections h̅₁, h̅₂, h̅₃, h̅₄, dont les amplitudes et les angles respectifs α₁, α₂, α₃, α₄ sont montrés.

Selon l'invention, l'intervention des actionneurs gyroscopiques 3 d'un satellite est plus particulièrement orientée vers la réalisation des changements d'attitude du satellite sur commande et un étage de contrôle par roues de réaction 2 est associé à l'étage, que forment les actionneurs gyroscopiques 3 dans ce satellite, pour assurer la précision des pointages et la stabilisation du satellite.

Il est donc possible de mettre en oeuvre des actionneurs gyroscopiques dont les spécifications sont nettement moins contraignantes que celles des actionneurs connus dans la mesure où essentiellement exploités pour procurer une agilité au satellite, ils n'ont pas besoin d'être très précis, puisque la précision du positionnement du satellite est prise en charge par l'étage composé de roues de réaction. Il est donc possible de les concevoir en privilégiant la robustesse et la simplicité. De plus la combinaison d'un étage composé d'actionneurs gyroscopiques et d'un étage composé de roues de réaction, dans le cadre d'un même système de contrôle d'attitude, permet d'éliminer le risque de singularité susceptible de conduire à la perte de contrôle du satellite qui existe avec un système de contrôle ne comportant que des actionneurs gyroscopiques. Il est ainsi possible d'exploiter au maximum le potentiel en moment cinétique de l'étage d'actionneurs gyroscopiques. Les roues de réaction étant utilisées pour la précision et l'accumulation du moment cinétique dû aux couples perturbateurs, le contrôle des actionneurs gyroscopiques devient robuste et compatible avec des lois d'évitement simple (loi indirecte, reconfiguration sur les angles préférés...), puisque le système d'actionneurs gyroscopiques reste à moment cinétique nul, impliquant la maîtrise de la configuration du système de contrôle. Ainsi, il permet d'éviter un surdimensionnement des actionneurs, minimisant le coût de l'équipement et de simplifier la complexité technique du système. Ainsi, les contacts tournants du palier cardan peuvent être remplacés par une tresse conductrice souple, L'association moteur continu et d'un codeur optique peut être remplacé par un simple moteur à pas.

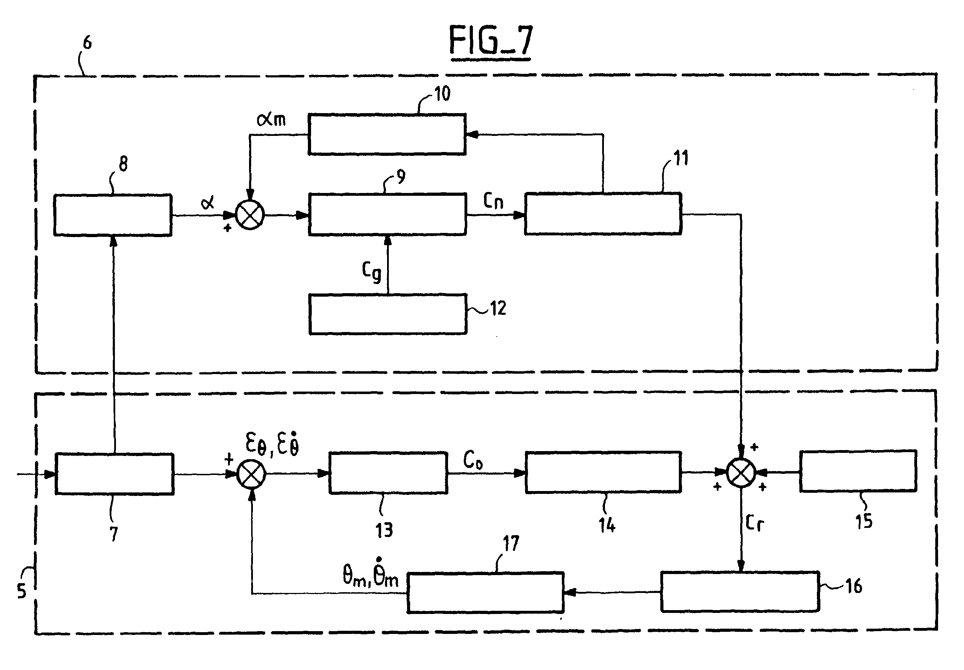

Un exemple non limitatif d'étage composé de roues de réaction est schématisé sur la figure 6. Il est réalisé selon un arrangement connu, ici supposé repris dans le cadre de l'invention.

L'étage présenté est constitué de trois roues de réaction 2a, 2b, 2c ayant leurs axes de rotation respectifs qui correspondent angulairement aux 3 axes X, Y, Z du référentiel fixe évoqué plus haut. La valeur du moment cinétique de chacune de ces roues est modifiable avec précision par une action sur la vitesse du moteur entraînant la rotation de cette roue. La combinaison de roues de réaction de l'étage permet l'obtention d'un couple de faible valeur, finement modulable et aisément exploitable au niveau du satellite, pour terminer avec précision un pointage ou aussi une correction d'attitude en phase de stabilisation.

A cet effet, le système de contrôle d'attitude, selon l'invention, comporte un ensemble de traitement programmé pour contrôler les deux étages de contrôle. Cet ensemble de traitement est supervisable depuis le sol. Il agit en fonction d'une programmation, enregistrée dans une unité de stockage embarquée et/ou transmise depuis le sol, qui détermine un profil à respecter. Un schéma de principe d'un tel ensemble de traitement est illustré sur la figure 7, à titre d'exemple non-limitatif.

Cet ensemble de traitement comporte deux sous-ensembles 5 et 6 prenant respectivement en compte les actionneurs gyroscopiques et les roues de réaction.

Il exploite un profil de manoeuvre, prévu pour le satellite en orbite, dont les données sont enregistrées dans une unité 7 où elles ont été par exemple préenregistrées ou stockées après avoir été reçues par transmission depuis le sol, comme déjà indiqué ci-dessus.

Lorsqu'un changement d'attitude est demandé en application d'un profil de manoeuvre choisi, le sous-ensemble 5 chargé de la prise en compte des actionneurs gyroscopiques reçoit de l'unité 7 une consigne de positionnement angulaire, dite de cardan, référencée α sur la figure 7. Cette consigne définit ici l'angle d'inclinaison à donner mécaniquement à chaque cardan et correspond donc au choix d'un angle déterminé pour le moment cinétique propre à chaque actionneur, à partir d'une position de référence de cardan mécaniquement déterminée. Une consigne est habituellement conservée jusqu'à l'envoi de la consigne suivante que donne le profil choisi. Dans le cas d'un moteur à courant continu, l'indication d'angle α est traitée par un correcteur d'attitude 9 en liaison avec une indication d'angle mesurée αₘ, fournie par un senseur 10 couplé à l'étage de contrôle 11 composé d'actionneurs gyroscopiques 3, et une estimation Cg du couple gyroscopique réalisée par une unité 12. Le correcteur fournit une consigne de couple moteur C_{M} à partir d'une indication d'angle qui est obtenue par addition des indications α et αₘ et de l'estimation Cg. Cette consigne se traduit par une commande d'inclinaison spécifique pour le cardan de chacun des actionneurs gyroscopiques de l'étage 11, elle est exploitée par le moteur qui assure les changements d'orientation du cardan dans chaque actionneur 3. Dans le cas d'un moteur à pas, la consigne en position est directement commandée au moteur qui fournit au cardan l'orientation désirée. Il s'agit dans ce cas d'une boucle ouverte ne nécessitant pas de senseur.

Le couple produit par l'étage d'actionneurs gyroscopiques est pris en compte par le sous-ensemble 5, relatif aux roues de réaction 2, où il est considéré comme une des perturbations dont ce sous-ensemble assure la prise en compte. Sont considérées comme des perturbations, les divers phénomènes plus particulièrement d'origine externe dont l'intervention est susceptible de modifier de manière parasite l'attitude du satellite en orbite d'une manière autre que celle imposée par le sous-ensemble 5. Une modification intervient par exemple lorsque le satellite comporte un élément de structure externe déporté, tel qu'un panneau solaire, qui tend à imposer une rotation indésirée au satellite du fait de sa traînée.

Le sous-ensemble 5 est aussi relié à l'unité 7 dont il est susceptible de recevoir des données spécifiques, en fonction du profil alors choisi pour le satellite. Dans l'exemple présenté, cette unité 7 est supposée incluse dans le sous-ensemble 5 où elle est reliée à un correcteur d'attitude 13. Celui-ci agit sur l'étage 14 de roues de réaction 2 du satellite pour que ces roues modifient dynamiquement l'attitude du satellite. Cette attitude et cette vitesse sont fonction des couples appliqués au satellite par les roues de réaction, les actionneurs gyroscopiques et les couples perturbateurs 15 qui viennent agir sur le satellite de manière dynamique. Le couple résultant Cᵣ correspondant, appliqué au satellite, entraîne une rotation de ce satellite dont l'attitude θ et la vitesse θ̇ sont déterminées par un ensemble de senseurs 17, il est symbolisé fictivement dans cet étage sous la référence 16,. Les indications de mesure d'attitude θₘ et de mesure de vitesse de rotation θ̇ₘ de satellite réalisées par l'ensemble de senseurs 17 sont additionnées aux indications fournies par l'unité 7 pour constituer des consignes de correction d'erreur de position angulaire εθ et de vitesse de rotation εθ̇ qui sont exploitées par le correcteur d'attitude 13 pour fournir une consigne de couple Cc à l'étage 14 de roues de réaction du satellite. Cette consigne se traduit par une commande de vitesse spécifique pour le moteur d'entraînement, non schématisé, de chacune des roues de réaction qui produit le couple requis en accélérant, ralentissant ou éventuellement en maintenant sa vitesse, selon la valeur de couple alors imposée.

Le couple susceptible d'être produit par l'étage de roues de réaction est pratiquement sans effet, en phase de changement d'attitude sous l'action des actionneurs gyroscopiques et tant que le couple produit par l'étage formé par ces actionneurs n'est pas nul. Les roues de réaction fonctionnent en boucle fermée et elles permettent d'assurer le suivi de profil et la correction des erreurs de position et de vitesse de rotation du satellite, ces erreurs étant notamment dues à l'imprécision relative du couple fourni par l'étage d'actionneurs gyroscopiques réinjecté en boucle avant.

## Revendications

1. Système pour le contrôle d'un satellite en attitude **caractérisé en ce qu'**il comporte un premier étage de contrôle (11) composé d'actionneurs gyroscopiques et un second étage de contrôle (14) composé de roues à réaction respectivement exploités dans le cadre d'un ensemble de traitement programmé (5, 6), le premier étage pour assurer les changements d'attitude du satellite et le second pour assure ta précision et la stabilité du pointage du satellite.

2. Système selon la revendication 1, dans lequel le premier étage de contrôle comporte quatre actionneurs gyroscopiques (3) disposés selon une configuration pyramidale.

3. Système selon l'une des revendications 1 et 2, dans lequel le second étage de contrôle (14) comporte au moins trois roues de réaction (1) dont les axes de rotation ont des orientations différentes.

4. Procédé de contrôle d'attitude pour satellite équipé d'un premier étage de contrôle (11) composé d'actionneurs gyroscopiques et d'un second étage de contrôle (14) composé de roues à réaction, **caractérisé en ce qu'**il exploite le premier étage composé d'actionneurs pour la réalisation sur commande des changements d'attitude du satellite et **en ce qu'**il exploite le second étage composé de roues de réaction pour le pointage du satellite et sa stabilisation.

5. Procédé, selon la revendication 4, dans lequel l'étage composé de roues de réaction est exploité pour accumuler les couples perturbateurs qui affectent le satellite.

## Claims

1. System for the control of a satellite in attitude **characterized in that** it comprises a first control stage (11) consisting of gyroscopic actuators and a second control stage (14) consisting of reaction wheels respectively used as part of a programmed processing assembly (5, 6), the first stage to ensure the changes of attitude of the satellite and the second to ensure the accuracy and stability of the pointing of the satellite.

2. System according to Claim 1, in which the first control stage comprises four gyroscopic actuators (3) placed in a pyramid configuration.

3. System according to one of Claims 1 and 2, in which the second control stage (14) comprises at least three reaction wheels (1) whose axes of rotation have different orientations.

4. Method of attitude control for a satellite fitted with a first control stage (11) consisting of gyroscopic actuators and a second control stage (14) consisting of reaction wheels, **characterized in that** it uses the first stage consisting of actuators to carry out on command the changes of attitude of the satellite and **in that** it uses the second stage consisting of reaction wheels to point the satellite and stabilize it.

5. Method according to Claim 4, in which the stage consisting of reaction wheels is used to accumulate the disruptive torques that affect the satellite.

## Patentansprüche

1. System zur Lageregelung eines Satelliten, **dadurch gekennzeichnet, dass** es eine erste Regelungsstufe (11), die aus gyroskopischen Stellgliedern besteht, und eine zweite Regelungsstufe (14) aufweist, die aus Schwungrädern besteht, die jeweils im Rahmen einer programmierten Verarbeitungseinheit (5, 6) betätigt werden, die erste Stufe, um die Lageänderungen des Satelliten zu gewährleisten, und die zweite, um die Präzision und die Stabilität der Ausrichtung des Satelliten zu gewährleisten.

2. System nach Anspruch 1, bei dem die erste Regelungsstufe vier gyroskopische Stellglieder (3) aufweist, die in einer Pyramidenkonfiguration angeordnet sind.

3. System nach einem der Ansprüche 1 und 2, bei dem die zweite Regelungsstufe (14) mindestens drei Schwungräder (1) aufweist, deren Drehachsen unterschiedliche Ausrichtungen haben.

4. Verfahren zur Lageregelung für einen Satelliten, der mit einer ersten Regelungsstufe (11), die aus gyroskopischen Stellgliedern besteht, und mit einer zweiten Regelungsstufe (14) ausgestattet ist, die aus Schwungrädern besteht, **dadurch gekennzeichnet, dass** es die aus Stellgliedern bestehende erste Stufe für die gesteuerte Durchführung der Lageänderungen des Satelliten betätigt, und dass es die aus Schwungrädern bestehende zweite Stufe für die Ausrichtung des Satelliten und seine Stabilisierung betätigt.

5. Verfahren nach Anspruch 4, bei dem die aus Schwungrädern bestehende Stufe betätigt wird, um die Stördrehmomente zu akkumulieren, die den Satelliten beeinträchtigen.
